# EUROPÄISCHE PATENTSCHRIFT

(11) **EP 1 459 825 B1**
(45) Veröffentlichungstag und Bekanntmachung des Hinweises auf die Patenterteilung: **24.05.2006**
(21) Anmeldenummer: 04005373.8
(22) Anmeldetag: 06.03.2004
(51) Int. Cl.: B23D 29/00, B23D 29/02, B25B 7/00, B25B 7/02

(54) **Trennvorrichtung für Werkstücke, wie Stangen, Bolzen und dergleichen, insbesondere für Gewindestangen**
Cutter for bolts or rods, particularly screwed rods
Outil pour couper les boulons ou les tiges, notamment les tiges filetées

(30) Priorität: 21.03.2003 DE 10313827
(43) Veröffentlichungstag der Anmeldung: 22.09.2004
(73) Patentinhaber: REMS-WERK Christian Föll und Söhne GmbH & Co, 71332 Waiblingen (DE)
(72) Erfinder: Wagner, Rudolf Dr.-Ing., 70376 Stuttgart (DE)
(74) Vertreter: Jackisch-Kohl, Anna-Katharina

(56) Entgegenhaltungen:
- DE-A- 19 515 955
- DE-U- 1 705 779
- FR-A- 2 529 813
- GB-A- 444 927
- US-A- 3 181 181
- US-A- 4 249 308
- PATENT ABSTRACTS OF JAPAN Bd. 0123, Nr. 76 (M-750), 7. Oktober 1988 (1988-10-07) & JP 63 127810 A (HITACHI KOKI CO LTD), 31. Mai 1988 (1988-05-31)

## Beschreibung

Die Erfindung betrifft eine Trennvorrichtung für Werkstücke, wie Stangen, Bolzen und dergleichen, insbesondere für Gewindestangen, nach dem Oberbegriff des Anspruches 1.

Für die Befestigung, insbesondere die Abhängung von Rohrleitungen, werden vielfach Schraubrohrschellen eingesetzt, die mit Gewindestangen positioniert werden. Sie müssen häufig auf Maß getrennt werden, zum Teil vor Ort. Hierzu werden Sägen, Trennschleifer oder auch spezielle Trenngeräte eingesetzt. Bei Verwendung von Sägen und Trennschleifern wird der Gewindeanfang verformt bzw. es entsteht ein Grat, so daß das Aufschrauben von Muttern nicht mehr ohne weiteres möglich ist. Bei den speziellen Trenngeräten werden zwei Betätigungshebel verwendet, die am freien Ende jeweils mit einer Trennbacke versehen sind, mit der die Gewindestange durchgetrennt wird. Auch hier entsteht am Gewindeanfang ein Grat bzw. eine Verformung, die das Aufschrauben einer Mutter erheblich erschwert. Darüber hinaus baut ein solches Trenngerät verhältnismäßig groß.

Bei der gattungsgemäßen Trennvorrichtung (DE 1 705 779 U) sind zweiarmige Schwenkhebel gelenkig miteinander verbunden. Damit Drähte mit größeren Durchmessern durchgetrennt werden können, sind an den von den Scherkanten abgewandten Enden der Schwenkhebel Hebelgelenkschenkel angelenkt, um eine Hebelübersetzung zum Aufbringen der Durchtrennkraft zu erzielen. Für Drähte mit kleinerem Durchmesser wird eine herkömmliche Trennzange verwendet.

Bei anderen bekannten Trennvorrichtungen (US-A-3 181 181, US-A-4 249 308, GB 444 927 A, FR-A-2 529 813) ist die Antriebsvorrichtung fester Bestandteil.

Es ist schließlich eine Trennvorrichtung bekannt (DE 195 15 955 A), die einen feststehenden und einen bewegbaren Schneidkopf aufweist. Der bewegbare Schneidkopf wird beim Trennvorgang mit einem Motor bewegt, der fester Bestandteil der Trennvorrichtung ist.

Der Erfindung liegt die Aufgabe zugrunde, die gattungsgemäße Trennvorrichtung so auszubilden, daß mit ihr bei kompakter Ausbildung eine einwandfreie Abtrennung der Werkstücke möglich ist.

Diese Aufgabe wird bei der gattungsgemäßen Trennvorrichtung erfindungsgemäß mit den kennzeichnenden Merkmalen des Anspruches 1 gelöst.

Bei der erfindungsgemäßen Trennvorrichtung werden für den Schervorgang zweiarmige Schwenkhebel eingesetzt. Mit dem einen Hebelarm werden die Schwenkhebel in der erforderlichen Richtung gegeneinander verschwenkt. Am anderen Hebelarm sind die Scherkanten vorgesehen, mit denen das Werkstück einwandfrei in der erforderlichen Länge getrennt werden kann. Aufgrund der zweiarmigen Ausbildung der Schwenkhebel zeichnet sich die erfindungsgemäße Trennvorrichtung durch eine kompakte Ausbildung aus. Dennoch können mit der Trennvorrichtung die Werkstücke sauber durchgetrennt werden. An die im Bereich zwischen den Schwenkhebeln befindlichen Laschen wird die Antriebsvorrichtung angeschlossen, deren Rollen an den schrägen Funktionsflächen der Schwenkhebel angreifen und diese beim Trennvorgang gegeneinander verschwenken.

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Es zeigen
- Fig. 1: in Seitenansicht eine erfindungsgemäße Trennvorrichtung,
- Fig. 2: einen Schnitt längs der Linie II-II in Fig. 1,
- Fig. 3: in einer Darstellung entsprechend Fig. 2 zwei Trenneinsätze in einer Grundstellung.

Die Trennvorrichtung dient dazu, Stangen, Bolzen und dergleichen, insbesondere aber Gewindestangen, in einfacher Weise sehr genau in der erforderlichen Länge zu trennen. Die Trennvorrichtung ist so ausgebildet, daß im Trennbereich keine Grate und dergleichen entstehen. Dies ist insbesondere für das Trennen von Gewindestangen von großem Vorteil, da durch den exakten Trennvorgang das Gewinde nicht beschädigt wird, so daß beispielsweise Muttern problemlos auf das abgetrennte Ende der Gewindestange geschraubt werden können.

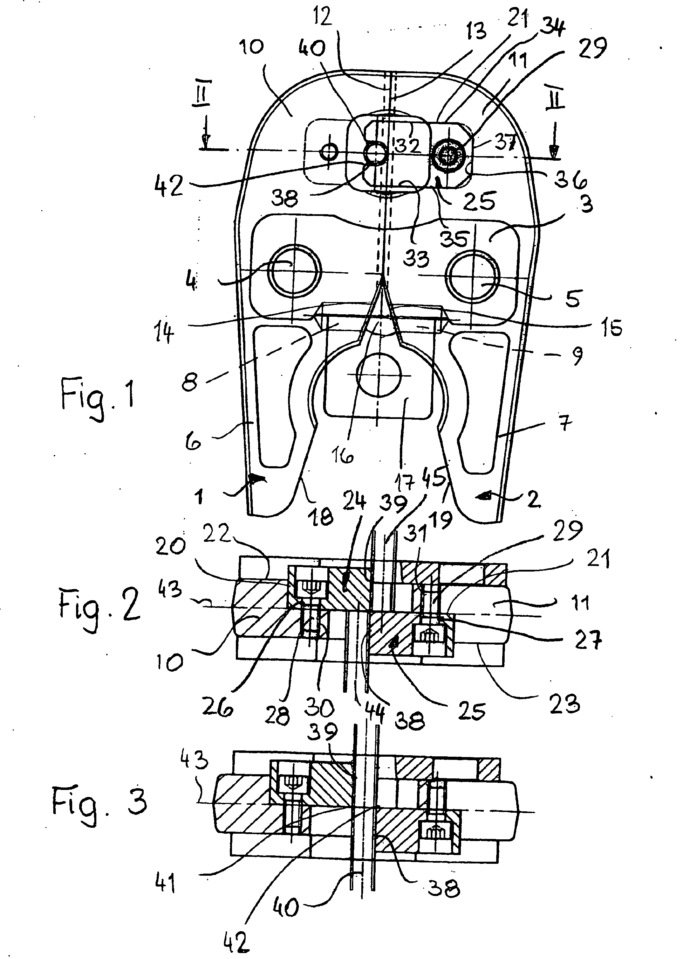

Die Trennvorrichtung hat zwei Schwenkhebel 1, 2, die zwischen zwei quer zu ihnen sich erstreckenden Laschen 3 mit Bolzen 4, 5 schwenkbar gelagert sind. Die Bolzen 4, 5 verbinden die Laschen 3 miteinander und dienen als Schwenkachsen für die zweiarmigen Hebel 1, 2. Die in Fig. 1 unteren Arme 6, 7 der Schwenkhebel 1, 2 sind durch eine (nicht dargestellte) Druckfeder gegeneinander belastet. Sie liegt in senkrecht zu den Bolzen 4, 5 liegenden Vertiefungen 8 und 9 in den Armen 6, 7. Durch die Druckfeder werden die Schwenkhebel 1, 2 so belastet, daß die anderen Arme 10, 11 der Schwenkhebel in Richtung zueinander belastet sind. In der in Fig. 1 dargestellten einen Endlage liegen die Schwenkhebel 1, 2 mit ebenen Stirnseiten 12, 13 flächig aneinander. In Höhe der Bolzen 4, 5 gehen die Stirnseiten 12, 13 in Schrägflächen 14, 15 über, die von den Stirnseiten 12, 13 aus divergierend verlaufen. Sie schließen einen spitzen Winkel miteinander ein. Dieser Winkel 16 bestimmt den maximalen Schwenkweg, den die beiden Schwenkhebel 1, 2 ausführen können, wenn die Arme 6, 7 in Richtung zueinander bewegt werden. Sobald die Schrägflächen 14, 15 hierbei aneinander zur Anlage kommen, ist der maximale Schwenkweg der Schwenkhebel 1, 2 erreicht.

Die Stirnflächen 12, 13 der Arme 6, 7 der Schwenkhebel 1, 2 können auch so gestuft ausgebildet sein (gestrichelte Linien in Fig. 1), daß in der Schließstellung gemäß Fig. 1 die Stirnflächen 12, 13 einander überlappen, in Achsrichtung der Bolzen 4, 5 gesehen. Dieser Übergriff wird dann wirksam, wenn der Schervorgang stattfindet. Durch diese Überlappung erfolgt in vorteilhafter Weise eine Abstützung beim Schervorgang, so daß beim Trennvorgang eine Gratbildung zuverlässig verhindert wird.

Die Trennvorrichtung hat zwei zwischen den Armen 6, 7 der Schwenkhebel 1, 2 befindliche Laschen 17, mit denen die Trennvorrichtung an eine (nicht dargestellte) Antriebsvorrichtung angeschlossen werden kann. Diese Antriebsvorrichtung ist bekannt und wird darum auch nicht näher beschrieben. Solche Antriebsvorrichtungen werden bei Preßzangen verwendet und haben Rollen, die an einer verschiebbaren Stange befestigt sind, die in Längsrichtung der Trennvorrichtung bewegbar ist. Diese Rollen laufen auf ebene Schrägflächen 18, 19 auf, die an den einander zugewandten Innenseiten der Arme 6, 7 der Schwenkhebel 1, 2 vorgesehen sind. Wird die Stange mit den Rollen ausgefahren, werden die Schwenkhebel 1, 2 durch die Rollen so geschwenkt, daß sie mit ihren Stirnseiten 12, 13 aneinander liegen.

Die Arme 10, 11 der Schwenkhebel 1, 2 sind mit jeweils einer Vertiefung 20, 21 versehen, die sich von der jeweiligen Stirnseite 12 bzw. 13 der Arme 10, 11 aus erstreckt. Wie Fig. 2 zeigt, sind die Vertiefungen 20, 21 zu den einander gegenüberliegenden Seitenflächen 22 und 23 der Arme 10, 11 offen. In die Vertiefungen 20, 21 werden Trenneinsätze 24, 25 eingesetzt, die gleich ausgebildet, aber spiegelbildlich zueinander angeordnet werden. Die Trenneinsätze 24, 25 haben jeweils eine Öffnung 26, 27 für den Durchtritt von Befestigungsschrauben 28, 29, die in Gewindebohrungen 30, 31 in den Armen 10, 11 geschraubt werden. Die Schraubenköpfe liegen vertieft in den Trenneinsätzen 24, 25.

Die Trenneinsätze 24, 25 haben etwa rechteckförmigen Umriß und liegen mit ihren Längsseiten 32, 33 flächig an Längsseiten 34, 35 der entsprechenden Vertiefungen 20, 21 an. Außerdem liegen die Trenneinsätze 24, 25 mit einer Schmalseite 36 flächig an der Schmalseite 37 der Vertiefungen 20, 21 an. Dadurch können die beim noch zu beschreibenden Trennvorgang auftretenden Kräfte zuverlässig auf die Schwenkhebel 1, 2 übertragen werden.

Die Trenneinsätze 24, 25 stehen jeweils über die Stirnseiten 12, 13 der Arme 10, 11 der Schwenkhebel 1, 2 vor. An diesem überstehenden Ende befindet sich eine teilkreisförmige Vertiefung 38, 39, die zur Aufnahme der zu trennenden Gewindestange 40 dient.

Die beiden Trenneinsätze 24, 25 sind so in Schwenkachsrichtung gegeneinander versetzt angeordnet, daß sie mit Trenn- bzw. Scherkanten 41, 42 in einer gemeinsamen Scherebene 43 liegen, die sich senkrecht zu den Bolzen 4, 5 erstreckt und im Ausführungsbeispiel in halber Breite der Arme 10, 11 der Schwenkhebel 1, 2 verläuft.

Die Vertiefungen 38, 39 erstrecken sich über die gesamte Breite der Trenneinsätze 24, 25. Werden Gewindestangen 40 getrennt, sind die Vertiefungen 38, 39 der Trenneinsätze 24, 25 mit einem Gewinde versehen, das dem Gewinde der zu trennenden Gewindestange 40 entspricht. Wenn darum die Gewindestange 40 in die Trennvorrichtung eingelegt wird, greifen die Gewinde der Gewindestange 40 und der Vertiefungen 38, 39 formschlüssig ineinander.

Damit die Gewindestange 40 in die Vertiefungen 38, 39 der Trenneinsätze 24, 25 eingelegt werden kann, werden die Arme 6, 7 der Schwenkhebel 1, 2 zusammengedrückt. Dadurch entfernen sich die Arme 10, 11 voneinander. Die Trenneinsätze 24, 25 werden entsprechend so weit mitgenommen, daß sie Abstand voneinander haben. Die Gewindestange 40 läßt sich dann in eine der beiden Vertiefungen 38, 39 einsetzen. Über den Gewindeeingriff wird die Gewindestange 40 in der jeweiligen Vertiefung 38, 39 axial gegen Verschieben gesichert. Werden die Arme 6, 7 freigegeben, werden die Schwenkhebel 1, 2 durch die in den Vertiefungen 8, 9 liegende Druckfeder so belastet, daß die Arme 10, 11 mit den Trenneinsätzen 24, 25 in Richtung zueinander geschwenkt werden. Sobald die Vertiefungen 38, 39 die zu trennende Gewindestange 40 umgreifen, wird die Schwenkbewegung der Schwenkhebel 1, 2 beendet. Da die beiden Vertiefungen 38, 39 jeweils etwa halbkreisförmig ausgebildet sind, umgreifen die Trenneinsätze 24, 25 in dieser Ausgangsstellung die Gewindestange 40 über den Umfang. Die Stirnseiten 12, 13 der Arme 10, 11 der Schwenkhebel 1, 2 haben in dieser Lage Abstand voneinander.

Mit der Antriebsvorrichtung wird anschließend die die Druckrollen tragende Stange ausgefahren. Die Druckrollen laufen auf die Schrägflächen 18, 19 der Arme 6, 7 auf und drücken diese auseinander. Dies hat zur Folge, daß die Trenneinsätze 24, 25 in Richtung zueinander bewegt werden. Die Scherkanten 41, 42 trennen dann die Gewindestange 40 im Bereich der Scherebene 43 (Fig. 2). Die Trenneinsätze 24, 25 übergreifen einander in der Trennstellung gemäß Fig. 2. Die nach dem Trennvorgang entstehenden beiden Abschnitte 44, 45 der Gewindestange 40 fallen nach dem Abschervorgang nicht aus den Trenneinsätzen 24, 25 heraus, weil die Stangenabschnitte 44, 45 infolge des Gewindeeingriffes mit den Trenneinsätzen 24, 25 gesichert sind. Nach dem Schervorgang wird die Stange mit den Druckrollen der Antriebsvorrichtung so weit zurückgefahren, daß zur Entnahme der Gewindestangenabschnitte 44, 45 die Arme 6, 7 der Schwenkhebel 1, 2 so weit zusammengedrückt werden können, daß sich die Gewindeabschnitte 44, 45 den Trenneinsätzen 24, 25 entnehmen lassen.

Da die Vertiefungen 38, 39 der Trenneinsätze 24, 25 mit dem Gewinde versehen sind, wird beim Schervorgang sichergestellt, daß die Gewindestangenabschnitte 44, 45 nicht gegeneinander kippen können, sondern axial zueinander ausgerichtet bleiben. Die Gewinde der Vertiefungen 38, 39 und der Gewindestangen 40 verhindern eine unerwünschte Schwenkbewegung der Gewindestangenabschnitte 44, 45 während des Trennvorganges. Dadurch wird der Gewindeanfang des abgescherten Gewindestangenabschnittes 44, 45 nicht verformt bzw. es entsteht kein Grat. Unmittelbar nach dem Schervorgang kann darum problemlos eine Mutter auf das abgescherte Gewindestangenende geschraubt werden.

Da die Trenneinsätze 24, 25 durch die zweiarmigen Schwenkhebel 1, 2 betätigt werden, kann die Trennvorrichtung sehr kompakt ausgebildet sein. Die zweiarmige Ausbildung der Schwenkhebel 1, 2 ermöglicht bei kleinem Schwenkwinkel ausreichend große Wege für die Trenneinsätze 24, 25 beim Schervorgang.

Je nach Größe der Gewindestange 40 können an den Schwenkhebeln 1, 2 entsprechend unterschiedliche Trenneinsätze 24, 25 befestigt werden. Die Gewindestangen 40 können beispielsweise in den Größen M8, M10 und M12 vorgesehen sein. Die Vertiefungen 38, 39 in den Trenneinsätzen 24, 25 sind entsprechend ausgebildet. Da die Trenneinsätze 24, 25 lösbar an den Schwenkhebeln 1, 2 befestigt sind, lassen sie sich problemlos und innerhalb kürzester Zeit austauschen.

Die Trennvorrichtung ist in Form einer Preßzange ausgebildet, wie sie zum Verpressen von Fittingen bei Rohrverbindungen eingesetzt wird. Solche Preßzangen haben Preßbacken, mit denen die Fittinge beispielsweise radial plastisch verformt werden. Es ist möglich, solche Preßbacken lösbar an den Schwenkhebeln 1, 2 zu befestigen, so daß die Preßbacken bei Bedarf einfach gegen die Trenneinsätze 24, 25 ausgetauscht werden können. Die lösbare Verbindung kann außer durch Schrauben beispielsweise auch durch Rastverbindungen erreicht werden. Für den Antrieb der Preßbacken und der Trenneinsätze kann dieselbe Antriebsvorrichtung eingesetzt werden. Dadurch steht dem Handwerker ein Universalgerät zur Verfügung, mit dem er wahlweise Fittinge bei Rohrverbindungen plastisch verformen oder Gewindestangen trennen kann.

Anstelle von Gewindestangen können mit der Trennvorrichtung auch beispielhaft Gewindebolzen, gewindelose Stangen und dergleichen abgetrennt werden. Diese Teile werden so in die Vertiefungen 38, 39 der Trenneinsätze 24, 25 eingelegt, daß sie mit den Scherkanten 41, 42 in der gewünschten Länge abgelängt werden können.

## Patentansprüche

1. Trennvorrichtung für Werkstücke (40) wie Stangen, Bolzen und dergleichen, insbesondere für Gewindestangen, mit zwei relativ zueinander beweglichen Scherkanten (41, 42) und zwei Betätigungshebeln (1, 2), die zweiarmige Schwenkhebel sind, deren einer Arm (6, 7) als Betätigungsarm vorgesehen ist und die am anderen Arm (10, 11) mit der jeweiligen Scherkante (41, 42) versehen sind,
**dadurch gekennzeichnet, daß** die einen Arme (6, 7) der Schwenkhebel (1, 2) an ihren einander zugewandten Innenseiten mit schräg zueinander verlaufenden Funktionsflächen (18, 19) für Rollen einer Antriebsvorrichtung versehen sind, die an Laschen (17) anschließbar ist, die im Bereich zwischen den einen Armen (6, 7) der Schwenkhebel (1, 2) vorgesehen sind.

2. Trennvorrichtung nach Anspruch 1,
**dadurch gekennzeichnet, daß** die Schwenkhebel (1, 2) in der Abscherstellung mit Stirnseiten (12, 13) aneinanderliegen.

3. Trennvorrichtung nach Anspruch 1 oder 2,
**dadurch gekennzeichnet, daß** die Scherkanten (41) an vorteilhaft lösbar an den Schwenkhebeln (1, 2) befestigten Trenneinsätzen (24, 25) vorgesehen sind.

4. Trennvorrichtung nach Anspruch 3,
**dadurch gekennzeichnet, daß** die Trenneinsätze (24, 25) jeweils eine vorteilhaft über die Dicke des Trenneinsatzes (24, 25) sich erstrekkende Aufnahme (38, 39) für das abzutrennende Werkstück (40) aufweisen.

5. Trennvorrichtung nach Anspruch 4,
**dadurch gekennzeichnet, daß** die vorteilhaft teilkreisförmigen Querschnitt aufweisende Aufnahme (38, 39) eine Vertiefung im Rand des Trenneinsatzes (24, 25) ist.

6. Trennvorrichtung nach Anspruch 4 oder 5,
**dadurch gekennzeichnet, daß** die Aufnahme (38, 39) im Auflagebereich für das abzutrennende Werkstück (40) mit einem Gewinde versehen ist, das vorteilhaft dem Gewinde des abzutrennenden Werkstückes (40) entspricht.

7. Trennvorrichtung nach einem der Ansprüche 3 bis 6,
**dadurch gekennzeichnet, daß** die Trenneinsätze (24, 25) über die Stirnseiten (12, 13) der anderen Arme (10, 11) der Schwenkhebel (1, 2) ragen.

8. Trennvorrichtung nach einem der Ansprüche 3 bis 7,
**dadurch gekennzeichnet, daß** die Trenneinsätze (24, 25) mit zumindest einem Teil ihrer Seitenränder (32, 33, 36) an Seitenwandungen (34, 35, 37) eines Aufnahmeraumes (20, 21) der Schwenkhebel (1, 2) anliegen.

9. Trennvorrichtung nach Anspruch 8,
**dadurch gekennzeichnet, daß** der Aufnahmeraum (20, 21) eine Vertiefung im Schwenkhebel (1, 2) ist.

10. Trennvorrichtung nach einem der Ansprüche 1 bis 9,
**dadurch gekennzeichnet, daß** die Trenneinsätze (24, 25) gegen Preßbacken austauschbar sind.

## Claims

1. Cutter for workpieces (40) like rods, bolts and the like, particularly for screwed rods with two shear edges (41, 42), movable relative to one another and two actuating levers (1, 2) being pivoted levers with two arms, the one arm (6, 7) provided as an actuating arm and the other arm (10, 11) supplied with the respective shear edge (41, 42),
**characterised in that** the one set of arms (6, 7) of the pivoted levers (1, 2) are provided at its inner sides directed towards each other with functional surfaces (18, 19) proceeding obliquely to one another for the reels of a drive device, which can be adjoined to lugs (17), provided within the zone between the one set of arms (6, 7) of the pivoted levers (1, 2).

2. Cutter according to claim 1,
**characterised in that** the pivoted levers (1, 2) are touching with their front faces (12, 13) one another in the shear-off position.

3. Cutter according to claim 1 or 2,
**characterised in that** the shear edges (41) are provided at cutter inserts (24, 25), advantageously detachable fastened at the pivoted levers (1, 2).

4. Cutter according to claim 3,
**characterised in that** the cutter inserts (24, 25) comprise respectively for the work piece (40) to be cut off a receiver (38, 39), extending advantageously over the thickness of the cutter insert (24, 25).

5. Cutter according to claim 4,
**characterised in that** the receiver (38, 39), comprising an advantageously circular cross-section, is a deepening within the border of the cutter insert (24, 25).

6. Cutter according to claim 4 or 5,
**characterised in that** the receiver (38, 39) is supplied within the bearing area for the work piece (40) to be cut off with a thread, corresponding advantageously to the thread of the work piece (40) to be cut off.

7. Cutter according to one of the claims 3 to 6,
**characterised in that** the cutter inserts (24, 25) jut out over the end faces (12, 13) of the other arms (10, 11) of the pivoted levers (1, 2).

8. Cutter according to one of the claims 3 to 7,
**characterised in that** the cutter inserts (24, 25) with at least a part of their side borders (32, 33, 36) abut to side walls (34, 35, 37) of a reception space (20, 21) of the pivoted levers (1, 2).

9. Cutter according to claim 8,
**characterised in that** the reception space (20, 21) is a deepening within the pivoted lever (1, 2).

10. Cutter according to one of the claims 1 to 9,
**characterised in that** the cutter inserts (24, 25) are changeable with pressing jaws.

## Revendications

1. Dispositif de coupe de pièces (40), telles que des barres, goujons et pièces similaires, en particulier pour des tiges filetées, comportant deux arêtes de coupe (41, 42) mobiles l'une par rapport à l'autre et deux leviers de manoeuvre (1, 2) qui sont des leviers pivotants à deux bras, dont l'un des bras (6, 7) est prévu sous forme de bras de manoeuvre et dont l'autre bras (10, 11) comporte l'arête de coupe (41, 42) correspondante, **caractérisé en ce que** les bras (6, 7) des leviers de manoeuvre (1, 2) comportent, sur leurs faces intérieures en regard l'une de l'autre, des surfaces fonctionnelles (18, 19), se rapprochant en oblique l'une vers l'autre, pour des galets d'un dispositif d'entraînement, qui peut être raccordé à des attaches (17) prévues dans la zone entre les bras (6, 7) des leviers de manoeuvre (1, 2).

2. Dispositif de coupe selon la revendication 1, **caractérisé en ce que** les leviers pivotants (1, 2) en position de cisaillement, sont en appui l'un contre l'autre par des faces frontales (12, 13).

3. Dispositif de coupe selon la revendication 1 ou 2, **caractérisé en ce que** les arêtes de coupe (41) sont prévues sur des plaquettes de coupe (24, 25) fixées avantageusement de manière amovible sur les leviers pivotants (1, 2).

4. Dispositif de coupe selon la revendication 3, **caractérisé en ce que** les plaquettes de coupe (24, 25) ont chacune un logement (38, 39) pour la pièce (40) à cisailler, lequel s'étend de manière avantageuse sur toute l'épaisseur de la plaquette de coupe (24, 25).

5. Dispositif de coupe selon la revendication 4, **caractérisé en ce que** le logement (38, 39), ayant de manière avantageuse, une section partiellement circulaire, est formé par un évidement au bord de la plaquette de coupe (24, 25).

6. Dispositif de coupe selon la revendication 4 ou 5, **caractérisé en ce que** le logement (38, 39) dans la zone d'appui de la pièce (40) à cisailler comporte un filetage qui correspond de manière avantageuse au filetage de la pièce (40) à cisailler.

7. Dispositif de coupe selon l'une quelconque des revendications 3 à 6, **caractérisé en ce que** les plaquettes de coupe (24, 25) s'engagent au-dessus des faces frontales (12, 13) des autres bras (10, 11) des leviers pivotants (1, 2).

8. Dispositif de coupe selon l'une quelconque des revendications 3 à 7, **caractérisé en ce que** les plaquettes de coupe (24, 25), avec au moins une partie de leurs chants latéraux (32, 33, 36), viennent en appui sur les parois latérales (34, 35, 37) d'un logement de réception (20, 21) des leviers pivotants (1, 2).

9. Dispositif de coupe selon la revendication 8, **caractérisé en ce que** le logement de réception (20, 21) est un évidement dans le levier pivotant (1, 2).

10. Dispositif de coupe selon l'une quelconque des revendications 1 à 9, **caractérisé en ce que** les plaquettes de coupe (24, 25) peuvent être remplacées par des mâchoires.
